# EUROPÄISCHE PATENTANMELDUNG

(11) **EP 2 071 759 A2**
(43) Veröffentlichungstag der Anmeldung: **17.06.2009**
(21) Anmeldenummer: 08105885.1
(22) Anmeldetag: 28.11.2008
(51) Int. Cl.: H04L 5/14, H04L 25/02, H04L 25/03, H04L 25/08

(54) **Übertragungsverfahren sowie Übertragungssystem für Signale unterschiedlicher Datenraten**

(30) Priorität: 14.12.2007 DE 102007060228
(71) Anmelder: ROBERT BOSCH GMBH, 70442 Stuttgart (DE)
(72) Erfinder: Kostorz, Wolfgang, 71263 Weil Der Stadt (DE)

(57) **Zusammenfassung**

Zur Übertragung von Signalen unterschiedlicher Datenraten für einen Vollduplex-Betrieb über einen einzigen Übertragungskanal (4) werden die Datenraten bezüglich ihres gegenseitigen Abstandes so gewählt, dass eine empfangsseitige Signaltrennung mit einer Signalfilterung (12, 21) niedriger Ordnung durchführbar ist. Das Sendesignal mit der niedrigeren Datenrate wird bandbegrenzt (5).

## Beschreibung

### Stand der Technik

Zur Datenübertragung von Signalen für Vollduplex-Betrieb werden bisher entweder getrennte Übertragungskanäle verwendet, oder es wird im Zeitmultiplex, z. B. in der Synchronisationslücke bei der Übertragung von Bildsignalen, gearbeitet.

Aus der US 2002/003 11 33 A1 ist eine Datenübertragung für Vollduplex-Betrieb über zwei differenzielle Übertragungskanäle vorgesehen. Es werden dort LVDS (Low Voltage Differential Signal)-Signale benutzt. Ein ähnliches Verfahren ist aus der KR-2005 095 668 A bekannt.

### Offenbarung der Erfindung

### Vorteile der Erfindung

Das erfindungsgemäße Verfahren mit den Merkmalen des unabhängigen Anspruchs 1 bzw. des Systems mit den Merkmalen des unabhängigen Anspruchs 4 hat demgegenüber den Vorteil, dass ein zeitgleiches Übertragen von Daten zwischen zwei Sende-Empfängerpaaren in Hin- und Rückrichtung über nur einen Übertragungskanal, bzw. nur ein Übertragungskabel, möglich ist.

Ein aufwendiges Timing wie beim zeitlichen Multiplex, eine Begrenzung der Datenmenge, oder die Gefahr von Datenverlust ist nicht notwendig bzw. tritt nicht auf.

Der Erfindung liegt die Erkenntnis zugrunde, dass ein rechteckiges Signal, wie es bei der digitalen Datenübertragung vorliegt, durch eine Fourier-Reihe dargestellt werden kann und dass weiterhin nur wenige Oberwellen benötigt werden, um ein nutzbares Signal darzustellen. Wenn der Bereich zwischen einem bandbegrenzten Signal des langsamen Datenstroms (Signalen mit niedriger Datenrate) und dem schnellen Datenstrom (Signal mit hoher Datenrate) ausreichend groß ist, können die Signale mit einfachen Filtern, d. h. Filter niedriger Ordnung, getrennt werden.

Mit denen in Anspruch 2 angegebenen Datenraten ist eine einfache Signaltrennung mit Filtern niedriger Ordnung möglich.

Mit der Bandbegrenzung nach Anspruch 3 ist eine Oberwellenunterdrückung ohne gravierende Qualitätsverluste möglich. Außerdem ist der Frequenzabstand zum Signal mit hoher Datenrate ausreichend groß, um eine einfache Signaltrennung durchführen zu können.

Mit dem Übertragungssystem nach Anspruch 4 ist ein Vollduplex-Betrieb über nur einen Übertragungskanal mit ausreichender Signaltrennung über einfache Filter möglich.

Bei einem ausreichend großen Abstand der Datenraten, z. B. weniger als 500 kBaud für das Signal niedriger Datenrate und mehr als 100 MBaud für das Signal hoher Datenrate, ist eine Vollduplex-Übertragung ohne merklichen Qualitätsverlust möglich. Für das Signal niedriger Datenrate ist eine Bandbegrenzung ab der der dritten Oberwelle möglich, ohne Informationsverlust, z. B. bei der Übertragung eines Steuer- und/oder Telemetriesignals.

Das Verfahren bzw. das Übertragungssystem der Erfindung eignet sich vorteilhaft für die bidirektionale Übertragung von Bild- und Steuerdaten zwischen einer Kamera und einem Steuergerät über nur einen Kabel. Vorteilhaft können LVDS-Signale mit AC-Ankopplung an die Übertragungsstrecke verwendet werden. Insbesondere eignet sich die Erfindung für den Einsatz in kamerabasierten Fahrerassistenzsystemen. Da nur ein Kabel verwendet wird, ist die Erfindung resistent gegenüber Störungen und/oder Schaltfehlern.

### Zeichnungen

Anhand der Zeichnungen werden Ausführungsbeispiele der Erfindung erläutert.
Es zeigen:
- Figur 1: ein Blockschaltbild für ein Übertragungssystem nach der Erfindung,
- Figur 2: das Spektrum der Signalüberlagerung der beiden Übertragungssignale mit unterschiedlichen Datenraten sowie die Signalfilterung.

### Ausführungsformen der Erfindung

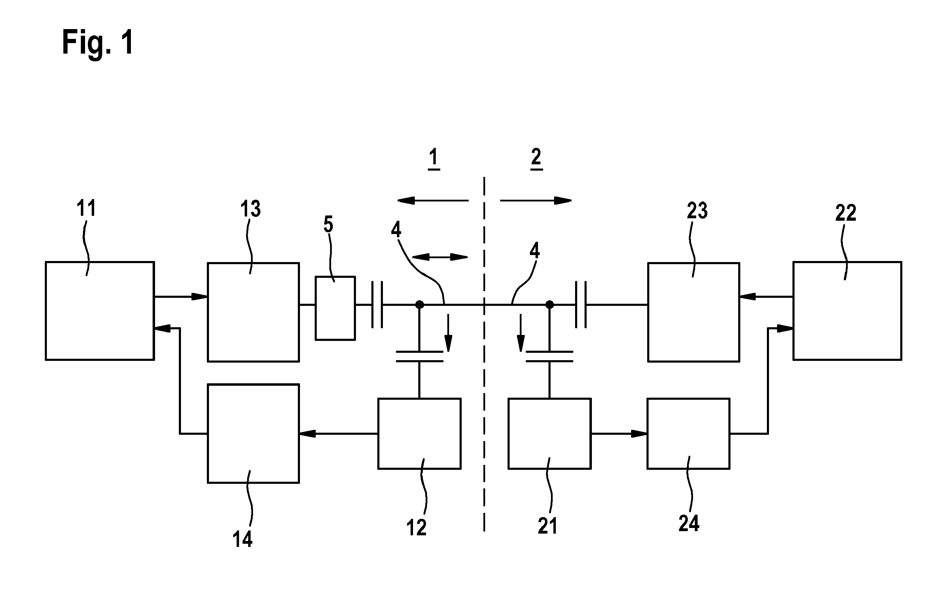

Bei dem Blockschaltbild gemäß Figur 1 ist eine erste Sende-/Empfangseinrichtung 1 mit einer zweiten Sende-/Empfangseinrichtung 2 über nur einen Übertragungskanal 4, z. B. über einen Kabel, verbunden. Für einen Vollduplex-Betrieb, d. h. beide Sende-/Empfangseinrichtungen 1 und 2 können mit unterschiedlichen Datenraten uneingeschränkt senden und empfangen, insbesondere auch gleichzeitig, wird das Sendesignal mit der niedrigeren Datenrate durch eine Bandbegrenzungseinrichtung 5 bandbegrenzt. Bei einer ACgekoppelten Übertragungsstrecke mit kleinen differenziellen Signalpegeln, wie z. B. LVDS (Low Voltage Differential Signal) überlagern sich die Signale der schnellen (hohe Bitrate) und langsamen (niedrige Bitrate) Datenübertragung. Die jeweiligen Datenraten der Signale bezüglich ihres gegenseitigen Abstandes werden so gewählt, dass eine empfangsseitige Signaltrennung mit einer Signalfilterung mittels Filtern niedriger Ordnung durchführbar ist.

Die Empfangseinrichtungen werden entsprechend der Datenrate mit einem Empfangsfilter 12 bzw. 21 ausgestattet, das die nicht gewünschten Signale abblockt. Wird z. B. als Sende-/Empfangseinrichtung 1 ein Steuergerät mit einer Sende-Datenrate von < 500 kBaud verwendet und als Sende-/Empfangseinrichtung 2 eine Kamera mit einer Sende-Datenrate von >100 MBaud, wird die Empfangseinrichtung des Steuergeräts 1 zum Empfang der Signale hoher Datenrate von der Kamera 2 mit einem Hochpassfilter 12 für z. B. 900 MHz (Eckfrequenz) und die Empfangseinrichtung der Kamera 2 zum Empfang der Signale niedriger Datenrate vom Steuergerät 1 mit einem Tiefpassfilter 21 für z. B. 6 MHz (Eckfrequenz) ausgestattet.

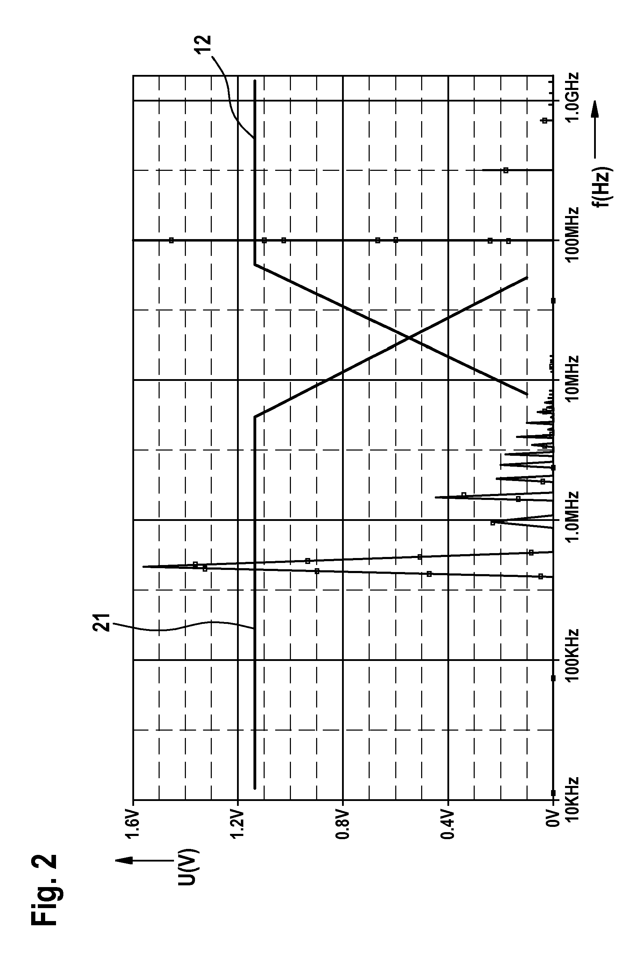

Aufgrund der spektralen Verteilung gemäß Figur 2 lassen sich die schnellen und die langsamen Signale mit einfachen Filtern trennen. Der schnelle Datenstrom enthält die Frequenzkomponenten 100 MHz, 300 MHz, 500 MHz etc.. Der langsame Datenstrom enthält die Frequenzkomponenten 500 kHz, 1,5 MHz, 2,5 MHz, 5,5 MHz etc. und kann nach der dritten Oberwelle bandbegrenzt werden, ohne dass das Signal übermäßig verändert wird. Der Bereich zwischen der dritten Oberwelle des langsamen Datenstroms und der Grundwelle des schnellen Datenstroms ist ausreichend groß, dass die Signale mit einfachen Mitteln, d. h. Filtern niedriger Ordnung, getrennt werden können.

Steuergerät 1 und Kamera 2 enthalten neben den Einheiten zur Signalaufbereitung 11 bzw. 22 noch Pegelumsetzer 13 bzw. 23 für den Sendebetrieb und Pegelumsetzer 14 bzw. 24 für den Empfangsbetrieb.

Im Gegensatz zur herkömmlichen Beschaltung - Kamera 2 als Sender, Steuergerät 1 als Empfänger - ist bei der Erfindung ein zweiter Übertragungspfad als Rückkanal ebenfalls AC ein- bzw. ausgekoppelt. Die AC-Kopplung ist in Figur 1 durch Kondensatoren symbolisiert.

Das Verfahren bzw. das System nach der Erfindung eignet sich insbesondere für kamerabasierte Fahrerassistenzsysteme, wobei an die Kamera vom Steuergerät aus Telemetriesignale, z. B. Parameter für Blende, Belichtung, Auslösezeitpunkt, übertragen werden und an das Steuergerät 1 die Bildsignale zur weiteren Verarbeitung.

## Patentansprüche

1. Übertragungsverfahren für zwei Signale unterschiedlicher Datenrate, **dadurch gekennzeichnet, dass** für einen Vollduplex-Betrieb ein einziger Übertragungskanal (4) benutzt wird, dass das Sendesignal mit der niedrigeren Datenrate bandbegrenzt (5) wird und dass die jeweiligen Datenraten der Signale bezüglich ihres gegenseitigen Abstandes so gewählt sind, dass eine empfangsseitige Signaltrennung mit einer Signalfilterung (12, 21) niedriger Ordnung durchführbar ist.

2. Übertragungsverfahren nach Anspruch 1, **dadurch gekennzeichnet, dass** für das Signal mit der niedrigeren Datenrate eine Datenrate von weniger als 500 kBaud verwendet wird und für das Signal mit der höheren Datenrate eine Datenrate von mehr als 100 MBaud.

3. Übertragungsverfahren nach Anspruch 1 oder 2, **dadurch gekennzeichnet, dass** die Bandbegrenzung (5) des Sendesignals mit der niedrigeren Datenrate nach der dritten Oberwelle vorgenommen wird.

4. Übertragungssystem für zwei Signale unterschiedlicher Datenraten zwischen jeweils einer Sende- und Empfangseinrichtung (1, 2), **dadurch gekennzeichnet, dass** für einen Vollduplex-Betrieb ein einziger Übertragungskanal (4) vorgesehen ist, dass der eine Sender (2) eingerichtet ist, ein Signal hoher Datenrate auszusenden und der andere Sender (1) ein Signal niedriger Datenrate, wobei die Datenraten bezüglich ihres gegenseitigen Abstandes so gewählt sind, dass eine empfangsseitige Signaltrennung mittels Filtern (12, 21) niedriger Ordnung durchführbar ist und dass dem Sender (1) für die Aussendung des Signals der niedrigen Datenrate ein Filter (5) zur Bandbegrenzung dieses Signals zugeordnet ist.

5. Übertragungssystem nach Anspruch 4, **dadurch gekennzeichnet, dass** der Sender (1) der einen Sende- und Empfangseinrichtung eingerichtet ist, ein Signal mit einer Datenrate von weniger als 500 kBaud auszusenden und der Sender (2) der anderen Sende- und Empfangseinrichtung ein Signal mit einer Datenrate von mehr als 100 MBaud.

6. Übertragungssystem nach Anspruch 4 oder 5, **dadurch gekennzeichnet, dass** dem Sender (1) für die Aussendung des Signals der niedrigeren Datenrate zugeordnete Filter (5) eine Bandbegrenzung nach der dritten Oberwelle des ausgesendeten Signals aufweist.

7. Verwendung des Übertragungsverfahrens bzw. des Übertragungssystems nach einem der Ansprüche 1 bis 6 für eine Kamera (2) und ein Steuergerät (1) zur Bild- und Steuerdatenübertragung mit Rückkanal über nur ein Kabel (4).

8. Verwendung des Übertragungsverfahrens bzw. des Übertragungssystems nach einem der Ansprüche 1 bis 6 für die Datenübertragung von Signalen mit kleinen differenziellen Signalpegeln.

9. Verwendung des Übertragungsverfahrens bzw. des Übertragungssystems nach einem der Ansprüche 1 bis 6 für kamerabasierte Fahrerassistenzsysteme.
